# EUROPEAN PATENT APPLICATION

(11) **EP 1 496 415 A2**
(43) Date of publication of application: **12.01.2005**
(21) Application number: 04015760.4
(22) Date of filing: 05.07.2004
(51) Int. Cl.: G05D 23/13

(54) **Compact thermostatic mixing valve**

(30) Priority: 10.07.2003 IT MI20031414
(71) Applicant: ALMAR S.R.L., 21026 Gavirate (Prov.of Varese) (IT)
(72) Inventor: Civelli, Gianluigi, 21020 Barasso (Prov. Varese) (IT); Civelli, Marco, 21020 Barasso (Prov. Varese) (IT)
(74) Representative: Modiano, Guido, Dr.-Ing.

(57) **Abstract**

A thermostatic mixing valve, comprising a body (1) that accommodates a temperature-sensitive element (6), actuated by elastic pusher means (7) and elastic compression means (11), and an actuation rod (13), the actuation rod (13) being inserted in the body (1) from above, in the opposite position with respect to the pusher means (7), and an annular element (14) being provided for locking the actuation rod (13) within the body (1).

## Description

The present invention relates to a compact thermostatic mixing valve. More particularly, the invention relates to a thermostatic mixing valve that can be installed even in faucets that have a small-diameter body, in accordance with current styling trends.

As is known, thermostatic mixing valves are used to automatically adjust the temperature of water and comprise a temperature-sensitive element that can produce an axial movement of a valve element in order to adjust the amount of hot and cold water flowing in a mixing chamber in response to sudden changes in the temperature and/or pressure of the water being supplied.

However, conventional thermostatic mixing valves have a diameter that does not allow to provide faucet bodies with slender shapes, indeed because it is necessary to introduce a thermostatic mixing valve of the above cited type in the faucet body.

In current faucet styling trends there is a predominance of faucets having an extremely linear shape and therefore having a body whose shape is typically cylindrical and has a small diameter, with consequent difficulties for faucet manufacturers in finding thermostatic valves that are adapted to be used in such faucets.

The aim of the present invention is to provide a thermostatic mixing valve that is compact, especially as regards its diameter.

Within this aim, an object of the present invention is to provide a thermostatic mixing valve that can be accommodated even in faucets that have particularly narrow and cylindrical bodies.

Another object of the present invention is to provide a thermostatic mixing valve that though having a reduced overall diameter does not have particular difficulties in assembly.

Another object of the present invention is to provide a thermostatic mixing valve that is highly reliable, relatively simple to provide, and at competitive costs.

This aim and these and other objects that will become better apparent hereinafter are achieved by a thermostatic mixing valve, comprising a body that accommodates a temperature-sensitive element, actuated by elastic pusher means and elastic compression means, and an actuation rod, characterized in that said actuation rod is inserted in said body from above, in the opposite position with respect to said pusher means, and in that there is provided an annular element for locking said actuation rod within said body.

Further characteristics and advantages of the invention will become better apparent from the description of the thermostatic mixing valve according to the present invention, illustrated by way of nonlimiting example in the accompanying drawings, wherein:

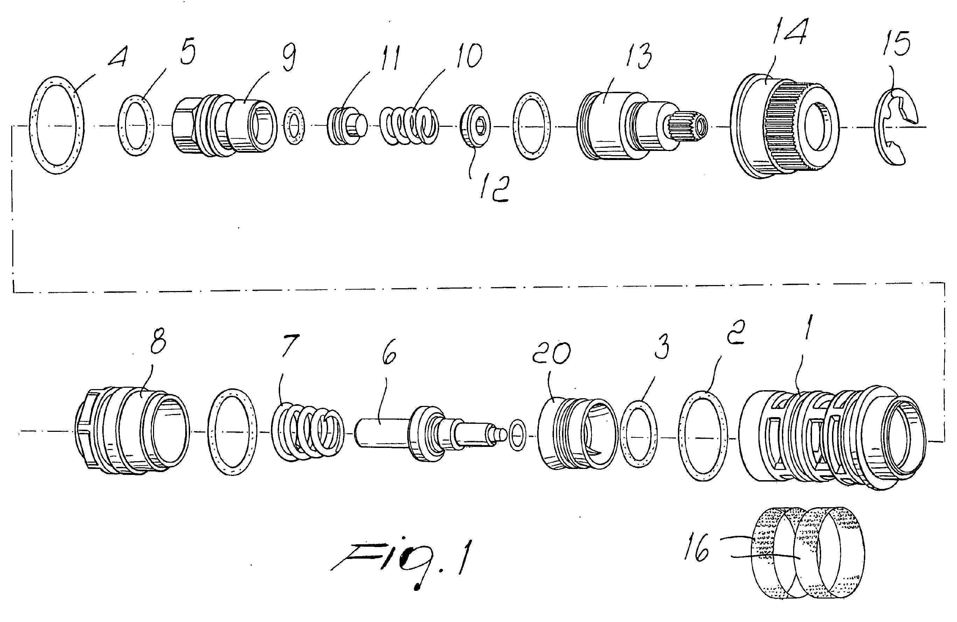

Figure 1 is an exploded perspective view of the valve according to the present invention; and

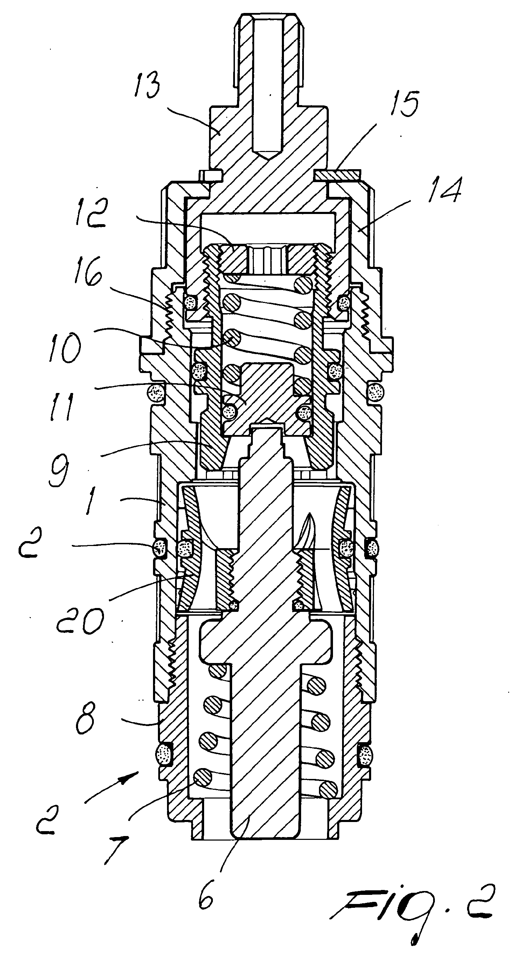

Figure 2 is a transverse sectional view of the valve according to the present invention.

With reference to the figures, the thermostatic mixing valve according to the present invention comprises a cartridge body 1, which is provided, at its respective ends, with two sealing rings of the O-ring type, having different diameters and designated by the reference numerals 2, 3 and 4, 5.

The sealing ring 3 is fitted on a sliding sleeve 20, through which a temperature sensitive element 6 is inserted; such element is kept compressed by way of first elastic means 7, which are conveniently constituted for example by a spring and abut against a lower annular element 8.

The sealing ring 5 is fitted on a temperature adjustment rod 9, which is accommodated within the body 1. The rod 9 in turn accommodates a safety spring 10 and a spring pusher disk 11, and a spring covering disk 12 at the opposite end. The particularity of the invention consists in that the actuation rod 13 of the valve is inserted at the end of the valve that lies opposite the end where the spring 7 is accommodated. This insertion facilitates assembly of the valve and at the same time allows to greatly reduce the diameter of said valve, so that it can be inserted in faucet bodies having a reduced diameter.

The actuation rod 13 is kept locked on the body 1 by means of an annular locking element 14, which is provided with a female thread that engages a male thread 16 provided on the top of the body 1, externally thereto.

In order to further lock the actuation rod 13, a snap ring 15 is also provided, which is arranged in abutment against the top of the annular locking element 14 and partially surround the actuation rod 13.

A filtering element 16 is arranged circumferentially outside the body 1 of the valve at two openings formed in the body 1.

Accordingly, the solution proposed according to the present invention provides a valve that has a smaller diameter than conventional valves and therefore obviates the assembly problems that would arise in view of the reduced diameter, by installing the actuation rod 13 from above, i.e., in an opposite position with respect to the pusher spring 7, thus locking the actuation rod with the annular locking element 14 and finally with the sealing ring 15.

In practice it has been observed that the thermostatic mixing valve according to the present invention fully achieves the intended aim and objects, since it can be provided with a smaller diameter than conventional valves, by installing the actuation rod above the valve, from the top, and then locking it in its seat by means of a suitable annular locking element and a sealing ring.

In practice, the materials used, as well as the dimensions and the contingent shapes, may be any according to requirements and to the state of the art.

The disclosures in Italian Patent Application No. MI2003A001414 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A thermostatic mixing valve, comprising a body (1) that accommodates a temperature-sensitive element (6), actuated by elastic pusher means (7) and elastic compression means (11), and an actuation rod (13), **characterized in that** said actuation rod (13) is inserted in said body (1) from above, in the opposite position with respect to said pusher means (7), and **in that** there is provided an annular element (14) for locking said actuation rod (13) within said body.

2. The valve according to claim 1, **characterized in that** said locking element (14) is provided internally with a thread that is adapted to engage a thread (16) formed externally on the body (1) of said valve.

3. The valve according to claim 1, **characterized in that** it further comprises a locking ring (15) that is adapted to abut against the top of said annular locking element (14) and to at least partially surround said actuation rod (13).
